# EUROPÄISCHE PATENTANMELDUNG

(11) **EP 3 147 511 A1**
(43) Veröffentlichungstag der Anmeldung: **29.03.2017**
(21) Anmeldenummer: 15186293.5
(22) Anmeldetag: 22.09.2015
(51) Int. Cl.: F04D 27/02

(54) **VERFAHREN ZUR PUMPGRENZREGLUNG, TURBOVERDICHTER**

(71) Anmelder: Siemens Aktiengesellschaft, 80333 München (DE)
(72) Erfinder: Nühse, Andreas, 44879 Bochum (DE); Klinkhammer, John Josef, 47055 Duisburg (DE)

(57) **Zusammenfassung**

Die Erfindung betrifft ein Verfahren zur Pumpgrenzreglung eines Turboverdichters (TCO),
wobei der Turboverdichter (TCO) zur Verdichtung eines Prozessgasmengenstroms (VG) ausgebildet ist,
wobei der Turboverdichter (TCO) eine erste Mengenverstelleinrichtung (FC1) zur Veränderung des Prozessgasmengenstroms (VG) aufweist,
wobei in einem Kennfeld (CDG) für den Betrieb des Turboverdichters (TCO) ein Fahrbereich (OPR) von einer Pumpgrenze (SL) definiert ist. Um den möglichen Fahrbereich bestmöglich auszunutzen, wird vorgeschlagen, dass das Verfahren die folgenden Schritte umfasst:
a) Definition einer aufgrund von thermodynamischen Eigenschaften des Turboverdichters vorgegebenen Pumpgrenze (SL),
b) Definition eines für alle Punkte der Pumpgrenze (SL) gültigen, lotrechten Abstandsmaßes (DSCL) in einem Richtabstand (DST),
c) Ermittlung eines aktuellen Abstands des aktuellen Betriebspunktes (OAC) lotrecht zur Pumpgrenze (SL) als Abstands-Bruchteil (FRP) des Richtabstands (DST) der Abstandslinie (DSCL) zur Pumpgrenze (SL),
d) Begrenzung einer ersten Verstellgeschwindigkeit (TR1) für einen ersten Betriebsbereich (OCR1) in dem Fahrbereich (OPR) der ersten Mengenverstelleinrichtung (FC1) auf einen ersten Grenzwert (LTR1) in Abhängigkeit von dem Abstands-Bruchteil (FRP),
wobei der erste Grenzwert (LTR1) derart von dem Abstands-Bruchteil (FRP) abhängt, das mit Abnahme des Abstands-Bruchteils (FRP) der erste Grenzwert (LTR1) ebenfalls abnimmt.

## Beschreibung

Die Erfindung betrifft ein Verfahren zur Pumpgrenzreglung eines Turboverdichters, wobei der Turboverdichter zur Verdichtung eines Prozessgasmengenstroms ausgebildet ist, wobei der Turboverdichter eine erste Mengenverstelleinrichtung zur Veränderung des Prozessgasmengenstroms aufweist. Daneben betrifft die Erfindung einen Turboverdichter mit einer Pumpgrenzreglung, die zur Durchführung dieses Verfahrens ausgebildet ist.

Herkömmliche Pumpgrenzreglungen arbeiten häufig nach Verfahren, die die physikalischen Möglichkeiten des Turboverdichters - in der Folge auch kurz als Verdichter bezeichnet - nicht vollständig ausnutzen. Während eine vollständige Ausnutzung des theoretisch möglichen physikalischen Fahrbereichs in einem Kennfeld begrenzt durch eine Pumpgrenze das Risiko des Pumpens des Verdichters nicht sicher ausschließt, sind moderne Verfahren zur Pumpgrenzreglung zumindest bemüht, eine enge Annährung an die Pumpgrenze zu erreichen. Die Erfindung folgt dem gleichen Vorsatz.

Zum Zwecke der besseren Ausnutzung des physikalisch möglichen Fahrbereichs eines Turboverdichters schlägt die Erfindung daher ein Verfahren nach Anspruch 1 vor. Daneben wird erfindungsgemäß ein Turboverdichter mit einer Pumpgrenzreglung vorgeschlagen, wobei die Pumpgrenzreglung ausgebildet ist nach dem erfindungsgemäßen Verfahren zu wirken. Die jeweils rückbezogenen Unteransprüche beinhalten vorteilhafte Weiterbildungen der Erfindung.

Bei dem erfindungsgemäßen Turboverdichter kann es sich zum Beispiel um einen Einwellen-Verdichter, einen Axialverdichter oder einen Zentrifugalverdichter oder einen Getriebeverdichter oder eine Bauform handeln, die sich aus den vorgenannten Bauformen kombiniert ergibt.

Viele Begriffe, die vorliegend zur Charakterisierung der Erfindung benutzt werden, beziehen sich auf ein Kennfeld des Turboverdichters. Das Kennfeld ist hierbei eine grafische Darstellung zur Charakterisierung des gegenwärtigen Betriebspunktes, insbesondere in einer zweidimensionalen Darstellung eines teilweise mehr als zwei Dimensionen beschreibenden Zusammenhangs. Das Kennfeld ermöglicht die Ablesung des für den Verdichter charakteristischen Verhaltens für gegebene Randbedingungen. Im Einzelnen ist der Zusammenhang dargestellt zwischen einer für die Prozessgasmenge, die durch den Turboverdichter strömt, charakteristischen ersten Größe und einer für die Verdichtung bzw. Druckerhöhung des Prozessgases charakteristischen zweiten Größe. In der Regel sind diese charakteristischen Größen auf den Koordinatenachsen in dem Kennfeld dimensionslos normiert, damit eine größtmögliche Generalisierung auf verschiedene Betriebsbedingungen möglich ist. In dimensionslosen Zusammenhängen des Kennfeldes sind außerdem Charakteristika verschiedener Betriebsbedingungen oder unterschiedlicher Turboverdichter besser vergleichbar.
Das zweidimensionale Kennfeld weist in der Regel auf der vertikalen Y-Achse oder Ordinate das Druckverhältnis bzw. die charakteristische Größe für die Verdichtung auf und auf der horizontalen X-Achse bzw. Abszisse einen dimensionslosen Volumenstrom bzw. eine Größe auf, die für den Prozessgasmengenstrom durch den Turboverdichter charakteristisch ist.

In dem Kennfeld lässt sich für einen Turboverdichter für jede bestimmte Ansaugtemperatur eine Pumpgrenze einzeichnen, die in Abhängigkeit von der Druckerhöhung und dem Volumenstrom oder Mengenstrom durch den Turboverdichter einen Fahrbereich linienhaft begrenzt, in dem der Turboverdichter beschädigungsfrei betrieben werden kann. Jenseits der Pumpgrenze außerhalb des Fahrbereichs kommt es zu einem instabilen Betrieb des Turboverdichters, der auch als Pumpen bezeichnet wird. Hierbei ist die Fördermenge derart vermindert, dass der Turboverdichter zyklisch abwechselnd fördert und eine Rückströmung des komprimierten Mediums erfährt, so dass starke Vibrationen auftreten, verursacht durch Druckstöße in diesem Zyklus. Hierbei kommt es außerdem meist zu einem schnellen Temperaturanstieg in dem Verdichter, so dass einerseits die hohe mechanische Belastung und andererseits die hohe thermische Belastung zu Beschädigung an Lagern, dem Rotor und dem angrenzenden Stator des Turboverdichters führen. Faktisch steigt damit auch die Temperatur des angesaugten Fluids, so dass die von der Temperatur abhängige Pumpgrenze sich den Effekt noch verstärkend zusätzlich im Kennfeld verlagert. Zur Vermeidung dieses Zustandes dient die erfindungsgegenständliche Pumpgrenzreglung, die auch als Pumpschutz bezeichnet wird.

Die Pumpgrenzreglung wirkt auf Mengenverstelleinrichtungen zur Veränderung des Prozessgasmengenstroms durch den Verdichter.
Zu dem Verdichter werden hierbei auch im weiteren Sinne Komponenten gerechnet, die ggf. ausschließlich zum Schutz gegen das Pumpen vorgesehen sind. Beispielsweise kann es sich hierbei um ein Bypassventil oder ein Abblaseventil oder ein Pumpschutzventil handeln, das bewirken kann, dass der Enddruck des Verdichters beim Öffnen dieses Ventils abgesenkt wird. Eine derartige Maßnahme bewirkt unmittelbar eine Verringerung des geförderten Prozessgasmengenstroms.
Eine andere Mengenverstelleinrichtung ist beispielsweise ein Eintrittsleitapparat oder ein Austrittsleitapparat, der jeweils verstellbar ausgebildet ist. Derartige Leitapparate dienen nicht nur der Veränderung des Wirkungsgrad des Turboverdichters, sondern auch als Mengenverstelleinrichtung und damit als Einflussfaktoren auf die Nähe zur Pumpgrenze des Turboverdichters.
Eine weitere Mengenverstelleinrichtung ist durch die Reglung der Drehzahl des Turboverdichters gegeben, weil die Drehzahl ebenfalls einen grundlegenden Einfluss auf die Fördermenge des Verdichters hat.

In dem ersten Schritt des Verfahrens nach der Erfindung (in Anspruch 1: a))erfolgt eine Definition einer Pumpgrenze in Abhängigkeit von thermodynamischen Eigenschaften des Turboverdichters. Diese Definition erfolgt auf der Annahme einer Ansaugtemperatur des Prozessfluids, das verdichtet werden soll. In vorteilhaften Weiterbildungen der Erfindung ist es sinnvoll, wenn hier für mehrere mögliche Ansaugtemperaturen jeweils die Linie der Pumpgrenze in dem Kennfeld ermittelt wird.

In dem Schritt b) des erfindungsgemäßen Verfahrens wird ein Abstandskriterium in Form einer Abstandslinie zur Pumpgrenze definiert. In der Folge wird die Abstandslinie auch als Abstandsnorm bezeichnet, wegen der lotrechten (normal zur Linie der Pumpgrenze) kürzesten Entfernung zur Pumpgrenze. Diese Abstandslinie verläuft in einem Abstand in zur Pumpgrenze lotrechter Richtung, wobei die Abstandslinie derart definiert ist, dass die Abstandslinie an jeder Stelle zu jeder Stelle der Pumpgrenze den Abstand als Mindestabstand aufweist Auf diese Weise ist der Turboverdichter jedenfalls vor dem Pumpen sicher geschützt, weil der Mindestabstand so gewählt ist, dass im Betrieb kein Pumpen auftreten kann.

Dieser Abstand der beschriebenen Abstandsnorm zur Pumpgrenze berücksichtigt außerdem Messunsicherheiten und Unsicherheiten hinsichtlich des Zustands des Turboverdichters, Unsicherheiten hinsichtlich der Eigenschaften des Prozessgases bzw. des Prozessfluids und Unsicherheiten hinsichtlich des Zustands des Turboverdichters auch bezüglich der Variabilität der Ausführung und Fertigung von Turboverdichtern einer Serie. In der Praxis ist es zweckmäßig, den Abstand dieser Abstandslinie, bis zu der die Mengenverstelleinrichtungen nach der Erfindung noch mit 100% Verstellgeschwindigkeit arbeiten dürfen, um einen Sicherheitsbetrag von etwa 5% bis 10% der Höhe des Fahrbereichs von der Pumpgrenze zu beabstanden.
Ein zweckmäßiger Ansatz kann es hierbei sein, die Pumpgrenzregellinie im Wesentlichen parallel zur Pumpgrenze verlaufen zu lassen. In vorteilhafter Weiterbildung ist es außerdem besonders sinnvoll, eine allgemeine zusammenhängende Abstandslinie zu ermitteln. Neben dem Verlauf der Pumpgrenze sollte die Abstandsnorm bzw. diese Abstandslinie außerdem eine konstruktive Druckbegrenzung berücksichtigen und etwaige zusätzliche Limitierungen aus einem Eintrittsleitapparat oder Austrittsleitapparat oder aus beidem.

Der kürzeste Abstand des Betriebspunktes zu einer beliebig verlaufenden Pumpgrenze, ist das kürzeste Lot zu einem Fußpunkt auf der Pumpgrenze von dem Betriebspunkt aus. Das ist nach der Erfindung der aktuelle Abstand, so dass sich in Schritt c) ein Abstandsbruchteil ergibt als Quotient aus diesem aktuellen lotrechten Abstand des Betriebspunktes zur Pumpgrenze und dem lotrechten Mindestabstand zur Pumpgrenze. Beträgt der Abstandsbruchteil 100%, arbeitet die betreffende (mindestens eine) Mengenverstelleinrichtungen mit bis zu 100% Verstellgeschwindigkeit (siehe Schritt d)).

Im Schritt d) wird ein Grenzwert aufgestellt für eine Verstellgeschwindigkeit für mindestens eine Mengenverstelleinrichtung bzw. für mindestens die erste Mengenverstelleinrichtung in derart, dass der Grenzwert abhängig ist von dem Abstandsbruchteil, so dass mit Abnahme des Abstandsbruchteil der erste Grenzwert ebenfalls abnimmt.

Eine Besonderheit der Erfindung liegt in dem Unterschreiten dieser Abstandsnorm, welches den Fahrbereich des Verdichters erweitert. Das ist nach der Erfindung zulässig, da hierbei die Verstellgeschwindigkeiten der jeweiligen Drosselorgane bis auf 0% reduziert werden.

Eine besonders vorteilhafte Weiterbildung sieht vor, dass die Pumpgrenzregellinie sich an einer Mehrzahl von Stützstellen orientiert. Die Abstandsnorm, welche den Abstand zur Pumpgrenze berechnet und die Mengenverstelleinrichtungen ansteuert, kann sich nicht nur an einer Mehrzahl von Stützstellen orientieren, sondern kann im Idealfall einer reellen Funktion, z. B. einem Polynom von Grad K, entsprechen.

Ferner ist es zweckmäßig, wenn der erste Grenzwert festgelegt wird für nur eine Verstellrichtung der ersten Mengenverstelleinrichtung, so dass in die entgegengesetzte Verstellrichtung in der Regel bidirektional verstellbaren Verstelleinrichtung nur eine einzige Richtung mittels der Restriktionen des ersten Grenzwertes eingeschränkt ist.

Die Abstandslinie, die sich durch den Richtabstand ergibt, bei der die Mengenverstelleinrichtungen noch mit 100% Öffnungs- bzw. Schließgeschwindigkeit arbeiten dürfen, verläuft besonders zweckmäßig zu der Pumpgrenze in einem Abstand zwischen 5% bis 10%, wobei 100% der Höhe des Fahrbereichs in dem dimensionslosen Kennfeld entsprechen. Unter der Höhe versteht der Fachmann hierbei die von dem Fahrbereich maximal erreichte Y-Koordinate, also den in der Regel höchsten Punkt der Pumpgrenze.

In einer weiteren vorteilhaften Weiterbildung der Erfindung ist es vorgesehen, dass für die erste Verstellgeschwindigkeit im ersten Betriebsbereich bis auf 0% der maximalen Verstellgeschwindigkeit bei einem Abstandsbruchteil von 0% der Grenzwert abgesenkt wird. Auf diese Weise ist weitestgehend gesichert, dass ein Überschwingen bis an die Pumpgrenze heran nicht stattfinden kann, so dass in der Praxis kein Pumpen auftritt.

Die bereits oben aufgeführten Mengenverstelleinrichtungen weisen jeweils zwei Verstellrichtungen auf, so dass es zweckmäßig ist, wenn von den beiden Verstellrichtungen nur eine einzige hinsichtlich der Verstellgeschwindigkeit eingeschränkt wird. Bei den Mengenverstelleinrichtungen, dem Eintrittsleitapparat, dem Austrittsleitapparat und der Drehzahlregelung ist es insbesondere sinnvoll, wenn genau diese Verstellrichtung mit dem Grenzwert eingeschränkt wird, die zu einer Annäherung an die Pumpgrenze führt. Die andere Verstellrichtung kann uneingeschränkt bleiben, so dass stets eine schnelle Entfernung von der Pumpgrenze möglich ist. Mit der Verstellgeschwindigkeit ist jeweils nur der positive Betrag der Verstellgeschwindigkeit in eine Richtung gemeint. In der Regel haben alle Pumpgrenzen einen ersten Betriebsbereich, in dem die Pumpgrenzen monoton ansteigend sind. Dort ist es sinnvoll, wenn die mit dem ersten Grenzwert begrenzte erste Verstellgeschwindigkeit in Richtung eines Mengenstromabfalls wirkt. Bei einer Annäherung an die Pumpgrenze und einer Unterschreitung des Mindestabstandes der Abstandsnorm wirkt eine weitere Verringerung des Mengenstroms wie eine Annäherung an die Pumpgrenze, so dass eine Beschränkung dieser Verstellgeschwindigkeit in diese Verstellrichtung sinnvoll ist.

Sollte eine Pumpgrenze einen zweiten Betriebsbereich aufweisen, der monoton fallend ausgebildet ist, ist es zweckmäßig, wenn in diesem Abschnitt der Pumpgrenze die erste Mengenverstelleinrichtung, bevorzugt alle Mengenverstelleinrichtungen, jeweils eine zweite Verstellgeschwindigkeit in jeweils einer von zwei möglichen Verstelleinrichtungen aufweist, die auf einen zweiten Grenzwert in Abhängigkeit von dem Abstandsbruchteil begrenzt ist, wobei die zweite Verstellgeschwindigkeit derart von dem Abstandsbruchteil abhängt, dass mit Abnahme des Abstandsbruchteils der zweite Grenzwert abnimmt, wobei die zweite Verstellgeschwindigkeit in Richtung einer Mengenstromzunahme wirkt.

Eine vorteilhafte Weiterbildung der Erfindung sieht vor, dass eine Zuordnung des aktuellen Betriebspunktes zu dem ersten oder dem zweiten Betriebsbereich erfolgt abhängig von der Lage der X-Koordinate bzw. des Mengenstrom-Parameters im Kennfeld zu dem Grenzpunkt bzw. Maximum zwischen dem ersten und zweiten Betriebsbereich.

Hierbei ist es entscheidend, dass eine Mengenstromzunahme in dem Bereich einer fallend ausgebildeten Pumpgrenze wie eine Annäherung an die Pumpgrenze wirkt und auf diese Weise die Gefahr des Pumpens erhöht wird. Daher ist eine Limitierung mit dem zweiten Grenzwert in diese Verstellrichtung der Verstellgeschwindigkeit zur Verhinderung des Pumpens zweckmäßig. Eine weitere vorteilhafte Weiterbildung der Erfindung sieht vor, dass eine Temperaturkompensation im Falle einer Variation der ersten Ansaugtemperatur zweckmäßig ist. In praktischer Ausführung ist die Pumpgrenze nicht für alle möglichen Ansaugtemperaturen lückenlos bekannt. Stattdessen ist die Pumpgrenze für eine diskrete Anzahl von Temperaturen in der Ansaugung des Turboverdichters in der Regelung hinterlegt. Zur bestmöglichen Ausnutzung und sicheren Verhinderung des Pumpens ist es daher zweckmäßig, wenn ausgehend von einer bekannten aktuellen Ansaugtemperatur des Turboverdichters die lotrechten Abstandsbruchteile zu den Pumpgrenzen bestimmt werden, die hinsichtlich ihrer zugrunde liegenden Ansaugtemperatur der aktuellen Ansaugtemperatur am nächsten liegen. Der aktuelle lotrechte Abstandsbruchteil ist ausgehend von diesen beiden bestimmten Abstandsbruchteilen mittels einer Interpolation oder Extrapolation auf Grundlage der gemessenen aktuellen Temperatur und der beiden den Abstandsbruchteilen zugrundegelegten Ansaugtemperaturen in einer für den Fachmann ansonsten bekannten Weise zu ermitteln bzw. anzunähern. Bevorzugt für die Interpolation oder Extrapolation ist eine lineare Interpolation oder Extrapolation.

In der Folge ist die Erfindung anhand eines speziellen Ausführungsbeispiels unter Bezugnahme auf Zeichnungen und Diagramme näher erläutert. Es zeigen:
- Figur 1: eine schematische Darstellung eines erfindungsgemäßen Turboverdichters zur Durchführung des erfindungsgemäßen Verfahrens,
- Figur 2: eine schematische Darstellung des Verfahrens anhand eines beispielhaften ersten Kennfeldes,
- Figur 3: eine schematische Darstellung des erfindungsgemäßen Verfahrens anhand eines zweiten Kennfeldes,
- Figur 4: ein schematisches Ablaufdiagramm für das erfindungsgemäße Verfahren,
- Figuren 5,6: jeweils eine schematische Darstellung einer Temperaturkorrektur in einem Kennfeld

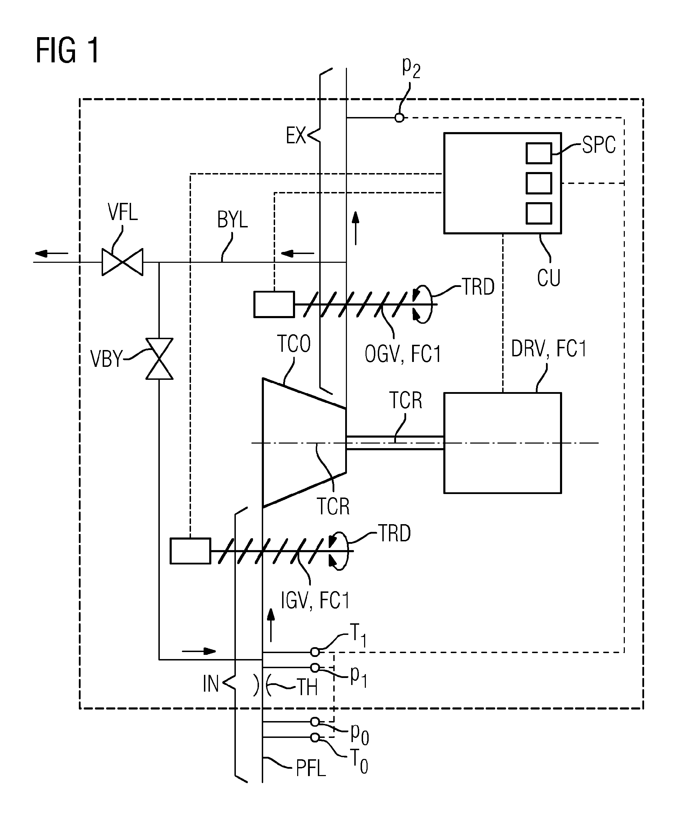

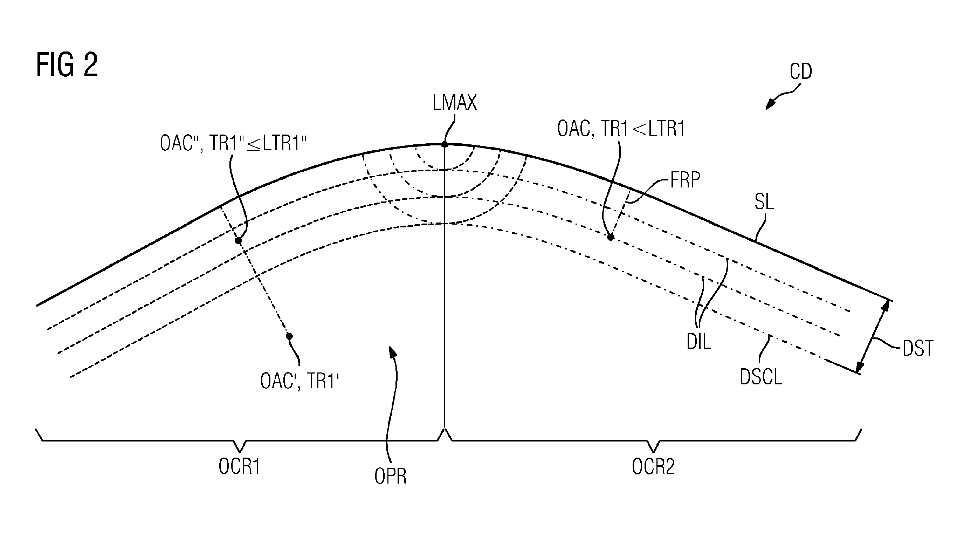

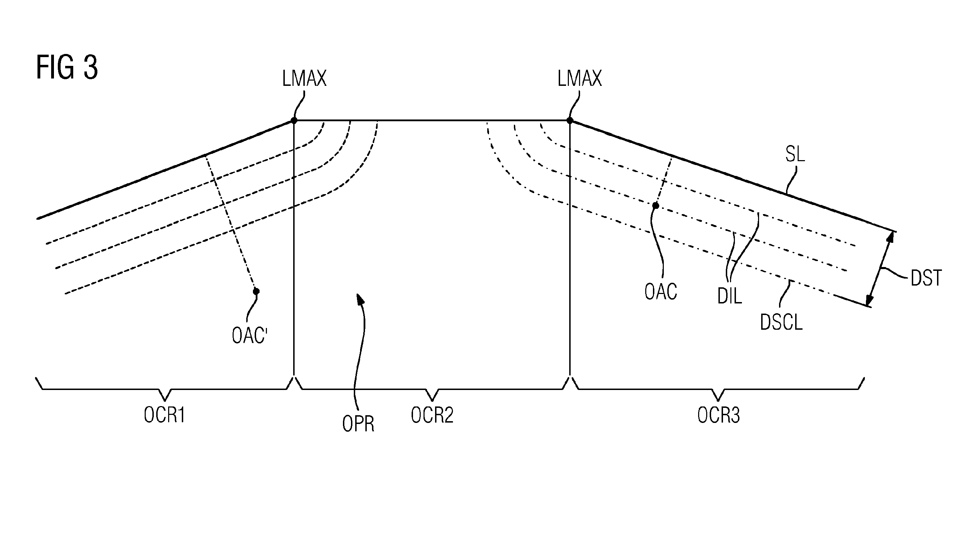

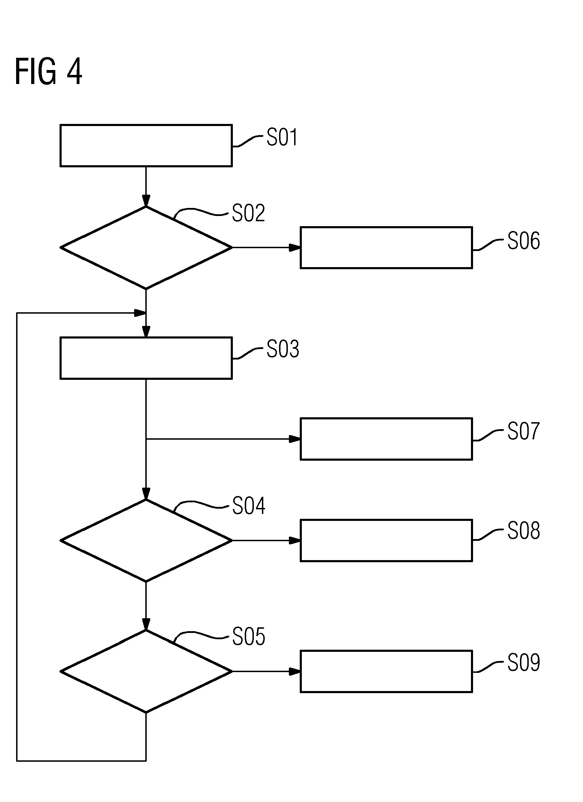

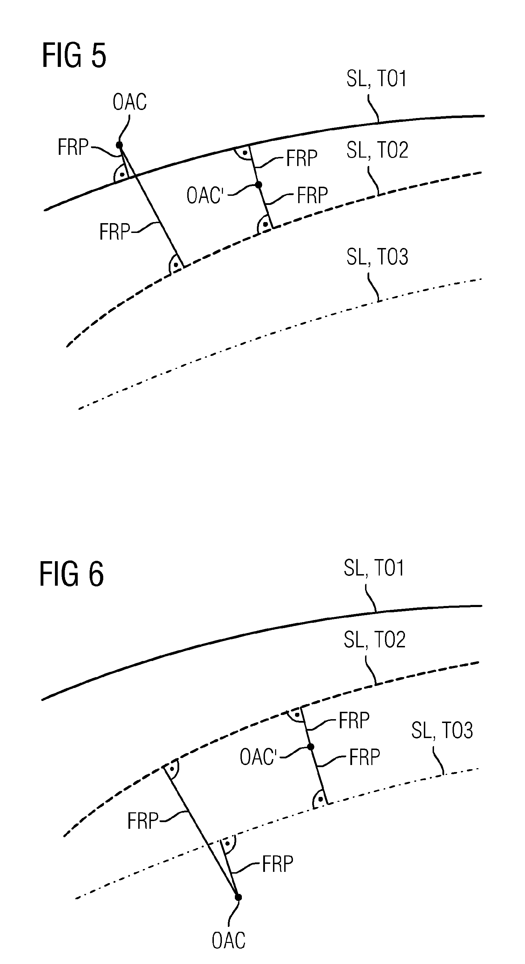

Figur 1 zeigt eine schematische Darstellung eines Turboverdichters TCO, der nach dem erfindungsgemäßen Verfahren arbeitet. Die Figuren 2, 3 zeigen jeweils ein mögliches Kennfeld CD des Turboverdichters TCO. Figur 4 zeigt ein Ablaufdiagramm für ein erfindungsgemäßes Verfahren. In den Figuren 5, 6 ist eine Temperaturkorrektur als vorteilhafte Weiterbildung der Erfindung wiedergegeben.

Ein Prozessfluid wird von dem Turboverdichter TCO über einen mit einer Drossel TH und verschiedenen Messstellen (zur Messung von T0, P1, P0) ausgestatteten Eintritt IN angesaugt und nach einer Verdichtung in einen Austritt EX, ausgestattet mit einer Messstelle (zur Messung von P2), fortgefördert. Die Messstellen in dem Eintritt IN messen einen Ansaugdruck P0 vor der Drossel TH, einen Eintrittsdruck P1 und eine Ansaugtemperatur T0. Gegebenenfalls kann auch zusätzlich eine Eintrittstemperatur T1 in ein erstes Verdichterlaufrad gemessen werden, die sich insbesondere im Falle eines geöffneten Bypasses von der Ansaugtemperatur T0 des Verdichters unterscheiden kann.
Die Drossel TH im Einlass mit den umgebenden Druckmessstellen kann zur Ermittlung des Massenstroms oder Volumenstroms genutzt werden.

Der Eintritt IN weist einen Eintrittsleitapparat IGV auf, der als eine Mengenverstelleinrichtung FC1 für das in den Turboverdichter TCO eintretende Prozessfluid PFL wirkt. Analog kann der Austritt EX einen Austrittsleitapparat OGV aufweisen (in der Figur 1 eingezeichnet - ist nur als optional zu verstehen), der ebenfalls als Mengenverstelleinrichtung FC1 im Austritt wirkt, zumindest insofern, als das mit dem Austrittsleitapparat OGV der Druckverlust im Austritt EX beeinflussbar ist, so dass der Mengenstrom durch den Turboverdichter TCO wirksam verändert werden kann.

Der Turboverdichter TCO umfasst einen von Statorelementen im Bereich umgebenen Turboverdichterrotor TCR, der von einem Antrieb DRV angetrieben ist. Der Austritt EX, der ein auf den Enddruck P2 verdichtetes Prozessfluid PFL führt, kann im Druckniveau abgesenkt werden, indem eine Bypassleitung BYL geöffnet wird. Die Bypassleitung BYL führt das verdichtete Prozessfluid PFL entweder in eine nicht näher dargestellte Drucksenke (z.B. Atmosphäre) über ein Abblaseventil VFL ab oder mittels der Öffnung eines Bypassventils VBY wird dieses Prozessfluid PFL - den Verdichtungspfad des Turboverdichters TCO umgehend - in den Einlass IN zurückgeführt. Zum Zwecke der Drucksenke ist es ausreichend, entweder das Bypassventils VBY oder das Abblaseventil VFL mit jeweils entsprechender Leitung vorzusehen.

Eine zentrale Steuerung CU nimmt die erläuterten Messungen von Druck und Temperatur auf und steuert die Stellungen der Leitapparate (Eintrittsleitapparat IGV, Austrittsleitapparat OGV) die Drehzahl des Antriebs DRV sowie die Stellung der die Bypassleitung BYL frei gebenden und verschließenden Ventile (Abblaseventil VFL, Bypassventil VBY). Auf diese Weise wirken die steuerbaren Komponenten Bypassleitung BYL, Eintrittsleitapparat IGV, Austrittsleitapparat OGV und der in seiner Drehzahl steuerbare Antrieb DRV bzw. eine Drehzahlreglung SPC der zentralen Steuereinheit CU als erste Mengenverstelleinrichtungen FC1 für die Förderung des Prozessfluids PFL durch den Turboverdichter TCO. In dem Begriffsverständnis des Turboverdichters TCO nach der Erfindung sind alle hier vorweg erläuterten Elemente und Komponenten Bestandteil 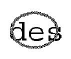 Turboverdichters TCO. Der Turboverdichter TCO wird hierbei als die Gesamtheit der Komponenten angesehen, die ein Prozessfluid PFL ansaugen und verdichtet weiter fördern. Dies schließt den Antrieb DRV und die Bypassleitung BYL mit den jeweils verbundenen Komponenten mit ein.

Die Figuren 2 und 3 zeigen jeweils eine schematische Darstellung eines Kennfeldes CD zur Illustration des erfindungsgemäßen Verfahrens für einen Turboverdichter TCO. Auf der X-Achse ist jeweils in Prozent vom maximalen Volumenstrom eine für den Volumenstrom charakteristische dimensionslose Kennzahl aufgetragen. Die Y-Achse zeigt hierbei eine für die Druckerhöhung dimensionslose charakteristische Kennzahl, z. B. das Druckverhältnis (Austrittsdruck p2/Eintrittsdruck p0) in Prozent von dem maximalen Druckverhältnis des Turboverdichters TCO aufgetragen. In dem Kennfeld CD ist jeweils eine Pumpgrenze SL aufgetragen und eine Pumpgrenzregellinie SCL sowie jenseits der Pumpgrenze SL in einem bestimmten Richtabstands DST zur Pumpgrenzregellinie SCL eine Abstandslinie DSCL. Die Abstandslinie DSCL verläuft im Wesentlichen parallel zur Pumpgrenze SL, wobei noch zusätzliche Abstandszwischenlinien DIL zwischen der Abstandslinie DSCL und der Pumpgrenze SL aufgetragen sind, die den jeweiligen Abstandsbruchteil FRP für einen Punkt zwischen der Abstandslinie DSCL und der Pumpgrenze SL angeben. Die Pumpgrenze SL weist ein lokales Maximum LMAX auf. Links von dem Maximum LMAX in einem ersten Betriebsbereich OCR1 ist die Pumpgrenze SL monoton steigend und rechts von dem Maximum LMAX in einem zweiten Betriebsbereich OCR2 monoton fallend.

Beispielhaft sind in dem Fahrbereich OPR des Kennfeldes CD mehere Betriebspunkte OAC, OAC', OAC" mit dazu gehörigen Verstellgeschwindigkeiten TR1, TR1', TR1" und dazu gehörigen Grenzwerten LTR1, LTR1', LTR1" eingezeichnet, sofern der Abstandsbruchteil FRP kleiner als 1 ist.

In dem Diagramm der Figur 3 ist die Darstellung vergleichbar, wobei die Pumpgrenze SL keinen stetigen Verlauf aufweist, sondern stattdessen in drei unstetig miteinander verbundene Betriebsbereiche OCR1, OCR2, OCR3 zerteilt ist. Der mittlere dortige zweite Betriebsbereich OCR2 beschreibt einen horizontalen Verlauf, so dass die jeweils links und rechts befindlichen Anschlussstellen des ersten steigenden Bereichs bzw. zweiten fallenden Bereichs an diesem horizontalen Zwischenverlauf als lokale Maxima LMAX betrachtet werden. Die Abstandslinie DSCL und die Abstandszwischenlinien DIL sowie die entsprechenden Abstandsbruchteile FRP werden im Bereich der lokalen Maxima LMAX gekennzeichnet durch um die Maxima LMAX herum dargestellte konzentrische Kreise.

Ausgehend von der Pumpgrenze SL wird in einem in Figur 4 mit S01 bezeichneten Schritt zunächst die Pumpgrenze SL definiert. Unter Auswertung der Ansaugtemperatur T0 wird in S02 entschieden, ob eine Temperaturkorrektur notwendig ist. Falls die Temperaturkorrektur notwendig ist, wird in dem mit S06 bezeichneten Schritt ausgewählt, welche beiden Pumpgrenzen SL für bestimmte Temperaturen hinsichtlich der Ansaugtemperatur anzuwenden sind. Falls keine Temperaturkorrektur notwendig ist, wechselt das Verfahren in den mit S03 bezeichneten Schritt, in dem der aktuelle Abstand des aktuellen Betriebspunktes OAC zur Pumpgrenzregellinie SCL als lotrechter Abstandsbruchteil FRP des Richtabstands DST der Abstandslinie DSCL zur Pumpgrenze SL ermittelt wird. Ausgehend von diesem Abstand wird in Schritt S07 entschieden, ob es eine Regelabweichung für den Pumpgrenzregler gibt und die Regelung entsprechende Maßnahmen veranlassen muss. Befindet sich der aktuelle Betriebspunkt OAC links eines lokalen Maximums, wie in den Figuren 2, 3 dargestellt, wechselt das Verfahren in den mit S08 bezeichneten Schritt, in dem die Verstellgeschwindigkeit TR1 in diesem ersten Betriebsbereich OCR1, einer ansteigenden Pumpgrenze in den Fahrbereich OPR einer ersten Mengenverstelleinrichtung FC1 - hier des Eintrittsleitapparates IGV - auf einen ersten Grenzwert LTR1 in Abhängigkeit von dem Abstandsbruchteil FRP reduziert wird. Befindet sich stattdessen der aktuelle Betriebspunkt OAC nicht links von dem lokalen Maximum, sondern rechts, wechselt das Verfahren in den mit S05 bezeichneten Schritt und veranlasst mit dem anschließenden mit S09 bezeichneten Verfahrensschritt, dass die Verstellgeschwindigkeit TR1 des Eintrittsleitapparates IGV bzw. einer ersten Mengenverstelleinrichtung FC1 in Öffnungsrichtung bzw. eine erste Verstellrichtung TRD in Abhängigkeit von dem Abstandsbruchteil FRP reduziert wird. Anschließend wechselt das erfindungsgemäße Verfahren wieder zu Schritt S03, um erneut auf Regelabweichungen zu prüfen.

Ein aktueller Betriebspunkt OAC, OAC' in den Figuren 5, 6 ist jeweils für zwei Fälle dargestellt, wobei Pumpgrenzregellinien SCL für drei unterschiedliche Temperaturen T01, T02, T03 ebenfalls dargestellt sind. Der lotrechte Abstandsbruchteil FRP des Abstands des aktuellen Betriebspunkts OAC zur Pumpgrenze SL wird festgelegt als eine lineare Extrapolation oder lineare Interpolation (in den Figuren 5, 6 jeweils beides dargestellt) der zwei Abstandsbruchteile FRP jeweils errechnet aus dem aktuellen Betriebspunkt OAC, OAC' und der ersten bzw. zweiten Pumpgrenzregellinie SCL1, SCL2 mit der jeweiligen Temperatur T01, T02 zu den Pumpgrenzen der Regellinien SCL1, SC12 der aktuellen Ansaugtemperatur TACT.

Die Figuren 5, 6 unterscheiden sich jeweils durch einen in Bezug auf die durch unterschiedliche Temperaturen hervorgerufenen unterschiedlichen Pumpgrenzen SL zum aktuellen Betriebspunkt OAC, OAC'.

## Patentansprüche

1. Verfahren zur Pumpgrenzreglung eines Turboverdichters (TCO),
wobei der Turboverdichter (TCO) zur Verdichtung eines Prozessgasmengenstroms (VG) ausgebildet ist,
wobei der Turboverdichter (TCO) eine erste Mengenverstelleinrichtung (FC1) zur Veränderung des Prozessgasmengenstroms (VG) aufweist,
wobei in einem Kennfeld (CDG) für den Betrieb des Turboverdichters (TCO) ein Fahrbereich (OPR), in dem der Turboverdichters (TCO) betreibbar ist, definiert ist,
wobei das Verfahren die folgenden Schritte umfasst:
a) Definition einer Pumpgrenze (SL) in Abhängigkeit von thermodynamischen Eigenschaften des Turboverdichters (TCO),
b) Definition einer Abstandslinie (DSCL) im Fahrbereich (OPR), in einem Richtabstand (DST) in zur Pumpgrenze (SL) lotrechten Richtung, wobei die Abstandslinie (DSCL) derart definiert ist, dass die Abstandslinie (DSCL) an jeder Stelle zu jeder Stelle der Pumpgrenze (SL) den Richtabstand (DST) als Mindestabstand aufweist,
c) Ermittlung eines aktuellen lotrechten kürzesten Abstands des aktuellen Betriebspunktes (OAC) zur Pumpgrenze (SL) als Abstands-Bruchteil (FRP) des Richtabstands (DST) der Abstandslinie (DSCL) zur Pumpgrenze (SL),
d) Begrenzung einer ersten Verstellgeschwindigkeit (TR1) für einen ersten Betriebsbereich (OCR1) in dem Fahrbereich (OPR) der ersten Mengenverstelleinrichtung (FC1) auf einen ersten Grenzwert (LTR1) in Abhängigkeit von dem Abstands-Bruchteil (FRP),
wobei der erste Grenzwert (LTR1) derart von dem Abstands-Bruchteil (FRP) abhängt, das mit Abnahme des Abstands-Bruchteils (FRP) der erste Grenzwert (LTR1) ebenfalls abnimmt.

2. Verfahren nach Anspruch 1,
wobei im Schritt a) die Pumpgrenze (SL) für eine erste Ansaugtemperatur (T1) festgelegt wird.

3. Verfahren nach mindestens einem der Ansprüche 1, 2,
wobei die Abstandslinie (DSCL) einen Abstand (R) zu der Pumpgrenze (SL) aufweist, der zwischen 3% bis 12%, insbesondere zwischen 4% - 9% der Höhe des Kennfeldes (CD) aufweist.

4. Verfahren nach mindestens einem der vorhergehenden Ansprüche 1 bis 3,
wobei der erste Grenzwert (LTR1) für die erste Verstellgeschwindigkeit (TR1) im ersten Betriebsbereich (OCR1) bis auf 0% der maximalen Verstellgeschwindigkeit (TR1) bei einem Abstands-Bruchteil (FRP) von 0% abgesenkt wird.

5. Verfahren nach mindestens einem der vorhergehenden Ansprüche 1 bis 4,
wobei die erste Verstellgeschwindigkeit (TR1) die Geschwindigkeit der Verstellung in nur einer von zwei Verstellrichtungen (TRD) ist.

6. Verfahren nach mindestens einem der vorhergehenden Ansprüche 1 bis 5,
wobei die erste Mengenverstelleinrichtung (FC1) eine der folgenden Einrichtungen des Turboverdichters (TCO) ist:
a) ein Eintrittsleitapparat (IGV)
b) ein Austrittsleitapparat (OGV)
c) eine steuerbare Bypassleitung (BYL)
d) eine Drehzahlregelung (SPC) zur Steuerung der Drehzahl eines Verdichterrotors (TCR).

7. Verfahren nach mindestens dem vorhergehenden Anspruch 6,
wobei der erste Betriebsbereich (OCR1) sich entlang eines Betriebsbereichs eines monoton ansteigenden Abschnitts der Pumpgrenze (SL) erstreckt und die erste Verstellgeschwindigkeit (TR1) in Richtung eines Mengenstromabfalls wirkt.

8. Verfahren nach mindestens dem vorhergehenden Anspruch 7,
wobei ein zweiter Betriebsbereich (OPR2) sich entlang eines monoton fallenden Abschnitts der Pumpgrenze (SL) erstreckt, und die erste Mengenverstelleinrichtung (FC1) eine zweite Verstellgeschwindigkeit (TR2) in einer von zwei möglichen Verstellrichtungen (TRD) aufweist, die auf einen zweiten Grenzwert (LTR2) in Abhängigkeit von dem Abstands-Bruchteil (FRP) begrenzt ist,
wobei die zweite Verstellgeschwindigkeit (TR2) derart von dem Abstands-Bruchteil (FRP) abhängt, dass mit Abnahme des Abstands-Bruchteils (FRP) der zweite Grenzwert (LTR2) abnimmt,
wobei die zweite Verstellgeschwindigkeit (TR2) in Richtung einer Mengenstromzunahme wirkt.

9. Verfahren nach mindestens den vorhergehenden Ansprüchen 1 bis 8,
wobei im Schritt a) für eine höhere erste Ansaugtemperatur (T1) eine erste Pumpgrenze (SL1) und für eine tiefere zweite Ansaugtemperatur (T2) eine zweite Pumpgrenze (SL2) festgelegt werden,
wobei der Abstands-Bruchteil (FRP) des Abstands des aktuellen Betriebspunktes zur Pumpgrenze (SL) festgelegt wird als eine lineare Extrapolation oder lineare Interpolation der zwei Abstands-Bruchteile (FRP) jeweils errechnet aus dem aktuellen Betriebspunkt (OAC) und der ersten bzw. zweiten Pumpgrenze (SL1, SL2) mit der jeweiligen Temperatur (T1, T2) zu den Pumpgrenzen (SL1, SL2) und der aktuellen Ansaugtemperatur (TACT).

10. Verfahren nach mindestens dem vorhergehenden Anspruch 9,
wobei mehr als zwei Pumpgrenzen (SL) zu unterschiedlichen Ansaugtemperaturen (TI) in Schritt a) festgelegt werden und die Extrapolation oder Interpolation auf Basis derjenigen zwei Pumpgrenzen (SL) durchgeführt wird, deren bestimmenden Ansaugtemperaturen (TI) zu der aktuellen Ansaugtemperatur (TACT) des aktuellen Betriebspunktes (OAC) am nächsten sind.

11. Turboverdichter (TCO) mit einer Pumpgrenzreglung (SLCU), die zur Durchführung des Verfahrens nach mindestens einem der vorhergenenden Ansprüche ausgeführt ist.
